# EUROPÄISCHE PATENTSCHRIFT

(11) **EP 3 888 904 B1**
(45) Veröffentlichungstag und Bekanntmachung des Hinweises auf die Patenterteilung: **24.07.2024**
(21) Anmeldenummer: 21165899.2
(22) Anmeldetag: 30.03.2021
(51) Int. Cl.: B32B 5/02, B41M 5/00

(54) **THERMOFORMBARES DEKORMATERIAL**
THERMOFORMABLE DECORATIVE MATERIAL
MATIÈRE DÉCORATIVE THERMOFORMABLE

(30) Priorität: 31.03.2020 CN 202010244510
(43) Veröffentlichungstag der Anmeldung: 06.10.2021
(73) Patentinhaber: Carl Freudenberg KG, 69469 Weinheim (DE)
(72) Erfinder: SPÖRL, Johanna, 70182 Stuttgart (DE); LI, Feng, 215168 Suzhou (CN); VENUGOPAL, Arun Prasad, 69469 Weinheim (DE); WAGNER, Klaus-Dietmar, 68542 Heddesheim (DE); WEIK, Angela, 68782 Brühl (DE)

(56) Entgegenhaltungen:
- US-A1- 2018 264 789
- US-A1- 2019 117 040

## Beschreibung

Die Erfindung betrifft ein thermoformbares Dekormaterial für den Automobilinnenraum sowie ein aus diesem hergestelltes Formteil. Die Erfindung betrifft ferner ein Verfahren zur Herstellung des thermoformbaren Dekormaterials sowie seine Verwendung zur Herstellung eines Formteils, insbesondere eines Innenverkleidungsteils im Automobil.

Die Innenverkleidung von Kraftfahrzeugen wie beispielsweise Dachhimmel oder Türverkleidungen bestehen üblicherweise aus einer Trägerschicht und einer Dekorschicht, die meist als Folie oder Textil ausgeführt ist und wobei Trägerschicht und Dekorschicht durch eine Adhäsivschicht verbunden sein können. Die Trägerschicht kann aus faserverstärktem Polypropylen bestehen, welches als Verstärkung zum Beispiel kostengünstige Glas- oder Holzfasern enthält. Alternativ kann die Trägerschicht aus Polyurethan-Hartschaum oder Polyurethan-Sandwichplatten bestehen. Weiterhin kann die Trägerschicht durch Hinterpressen oder Hinterspritzen der Dekorschicht mit faserverstärkten Thermoplasten ausgebildet werden. Die Dekorschicht kann als Folie oder Film beispielsweise aus Polyurethan, Polyvinylidenchlorid, thermoplastischen Polyolefinen oder Elastomeren vorliegen. Es können dekorative Strukturen in die Dekorschicht eingeprägt sein. Alternativ können Textilien wie Gewebe, Gewirke oder Vliesstoff eingesetzt werden, welche zusätzlich durch Prägung oder Druck von dekorativen Strukturen und/oder Mustern veredelt werden können. Als Fasermaterial zur Ausbildung der textilen Dekorschicht bieten sich insbesondere Polyester und Polyolefine an, die spinngefärbt sein können. Das Bedrucken des Textils erfolgt im Stand der Technik beispielsweise mit einer Druckpaste im Siebdruck- bzw. Rotationssiebdruckverfahren wie in der JP2014051268A beschrieben.

Nachteilig am Siebdruck- bzw. Rotationssiebdruckverfahren sind die geringe Flexibilität gegenüber Designwechseln und die technische Limitierung gegenüber aufwändigen Designs. Des Weiteren können kleine Losgrößen nicht wirtschaftlich hergestellt werden. Die beschriebenen Laminate aus Trägerschicht, Dekorschicht und gegebenenfalls Adhäsivschicht können durch Einwirkung von Hitze und gegebenenfalls Druck zu dreidimensionalen Geometrien umgeformt werden. Dabei kann die Laminierung der Lagen auch erst im Umformungsschritt erfolgen. Für die Umformung können Verfahren wie beispielsweise Warmformen, Vakuumformen oder Formpressen eingesetzt werden.

Aus der WO2018/170115 ist ein dekoratives Vlieslaminat bekannt, umfassend einen ersten Vliesstoff, der auf einer Seite eine Polymerfolie und einen zweiten Vliesstoff aufweist. Der Vliesstoff weist ferner ein Färbemittel auf, das vorzugsweise durch Siebdruck aufgebracht wurde. Um die Haltbarkeit der gedruckten Oberflächenschicht zu verbessern, kann auf dem ersten Vliesstoff eine Oberflächenbeschichtung, beispielsweise aus thermoplastischen Elastomeren, thermoplastischen Olefinen, Polyurethan, Polyethylen hoher Dichte, Polypropylen oder glykolmodifiziertem Polyethylenterephthalat (PETg) oder eine Kombination davon, aufgebracht sein. Das dekorative Vlieslaminat kann durch Einwirkung von Hitze und gegebenenfalls Druck mittels Verfahren wie Warmformen, Formpressen oder Vakuumformen zu einer dreidimensionalen Geometrie umgeformt werden. Nachteilig an dem Vlieslaminat ist, dass Siebdruckverfahren sehr aufwändig sind, da für jedes Design und für jede aufzudruckende Farbe eine eigene Siebschablone hergestellt werden muss, die nur eine begrenzte Lebensdauer hat. Daher lassen sich mehrfarbige Motive und kleine Losgrößen nicht wirtschaftlich herstellen. Des Weiteren sind die Schablonen, insbesondere bei Motiven mit feinen Konturen, anfällig gegenüber einem teilweisen Verschließen der Siebstruktur, mit Partikeln, etwa aus der Druckpaste. Dies führt zu Fehlern im Druckbild und kann, in begrenztem Umfang, durch gründliches Reinigen der Siebe behoben werden.

Einen weiteren Nachteil stellt die Verwendung von Thermoplasten für die Oberflächenbeschichtung dar: Wird das Vlieslaminat bei der weiteren Verarbeitung tiefgezogen und dafür erhitzt, so wird auch die thermoplastische Oberflächenbeschichtung aufschmelzen. Dadurch wird die Beschichtung zerstört und das eingesetzte Werkzeug, das mit dem Vlieslaminat in Kontakt gebracht wird, verschmutzt. Des Weiteren besteht, insbesondere bei der Verwendung von Polyolefinen als Oberflächenbeschichtung, das Risiko einer unzureichenden Anbindung der unpolaren Oberflächenbeschichtung an die bedruckte Oberfläche des ersten Vliesstoffs, die typischerweise einen polaren Charakter aufweist. Dies kann sich in einer Delamination der beiden Komponenten äußern. Die beschriebenen thermoplastischen Oberflächenbeschichtungen beeinflussen zudem den textilen Griff der Dekorschichten negativ, da eine glatte, folienartige Oberfläche entsteht. In der EP2476561A1 wird eine Innenwandverkleidung beschrieben, insbesondere von Wohnwagen und Wohnmobilen, aus mindestens einem ebenen oder leicht gebogenen plattenförmigen Verkleidungselement, das direkt mit der Wand verbunden ist, wobei das plattenförmige Verkleidungselement 2 bis 12 mm dick ist, 20 bis 80 Vol-% Luftporen enthält, eine Dichte von weniger als 1.0 g/cm³ aufweist und aus einer Polypropylenmatrix und Verstärkungsfasern besteht, und wobei das plattenförmige Verkleidungselement verbunden ist mit einem Vlies, einem textilen Stoff oder einer Folie, die im Sublimationsdruckverfahren mit Farbpigmenten bedruckt sind.

Nachteilig an dieser Innenwandverkleidung ist, dass sie sich auf ebene oder leicht gebogene Platten beschränkt und keine aufwändigeren Strukturen, wie z. B. Vertiefungen für Griffmulden realisierbar sind. Beim Einsatz des Sublimationsdruckverfahrens ist zudem der Einsatz von Transferpapier oder - folie nachteilig, welches nach dem Transfer des Dekors als Abfall anfällt. Darüber hinaus ist dem Fachmann bekannt, dass Sublimationstinten aufgrund ihrer Natur nicht den im Automobilinnenraum geforderten Lichtechtheiten und Langzeit-Temperatur- bzw. Temperatur- und Feuchtebedingungen standhalten, so dass es zu einer Verfärbung oder Ausbleichung der Farben und/oder zu einer Verringerung der Konturschärfe des Designs durch Ausbluten in benachbarte Bereiche innerhalb der Dekorschicht kommt.

DE102009023737A1 beschreibt einen Verbundwerkstoff umfassend: a) einen Träger, b) mindestens ein auf mindestens einer der beiden Seiten des Trägers auflaminiertes textiles Flächengebilde, welches vor der Laminierung mindestens einen Binder, vorzugsweise einen Binder im B-Stage aufweist und welches ggfs. mit einem Funktionsmaterial versehen sein kann, wobei das textile Flächengebilde vor der Laminierung mittels Digitaldruck mit einem Dekor versehen wurde. Dabei bedeutet der Begriff B-Stage, dass der Binder getrocknet ist und kein Lösungsmittel mehr enthält, aber noch nicht vollständig ausgehärtet ist. Die Druckschicht kann mit einer Schutzschicht versehen werden. Bei den Schichten zum Schutz der Druckschicht handelt es sich um Lacke, wie Pulverlacke, Klarlacke oder transparente Lacke, vorzugsweise um kratzfeste Lacke, oder andere Beschichtungen, wie beispielsweise Polyurethan-Heißbeschichtungen, die gegen mechanische Einflüsse oder gegen UV-Alterung schützen. Nachteilig an der Verwendung von Lacken oder Polyurethan-Heißbeschichtungen ist, dass sie den textilen Griff des Flächengebildes negativ beeinflussen. Darüber hinaus sind sie ungeeignet für nachfolgende thermische Verformungsschritte.

Wie oben erwähnt, ist Digitaldruck ebenfalls ein übliches Verfahren zum Bedrucken von Dekorschichten. Die Vorteile des Digitaldrucks gegenüber dem Siebdruckverfahren sind unter anderem die höhere Flexibilität im Bezug auf Designwechsel, der geringere Zeitbedarf für Wartungs- und Reinigungsaufgaben, die Möglichkeit mehrfarbige, anspruchsvolle und filigrane Motive in hoher Qualität, sowie kleine Losgrößen wirtschaftlich herzustellen. Da es beim Digitaldruck im Gegensatz zum Siebdruckverfahren keinen direkten Kontakt zwischen dem Druckwerkzeug und dem zu bedruckenden Substrat gibt, werden Defekte, die zum Beispiel durch verstopfte Siebe durch Fasern oder Partikeln aus dem Substrat herrühren, vermieden.

Da beim Digitaldruckverfahren viel geringere Tintenmengen eingesetzt werden als beim Siebdruckverfahren, ist das Digitaldruckverfahren deutlich nachhaltiger, da geringere Mengen an Chemikalien zum Einsatz kommen.

Bisher war es nicht möglich die mittels Digitaldruck bedruckten Dekorvliese und/oder deren Laminate ohne Qualitätsverluste im digital gedruckten Design durch Umformprozesse wie Thermoformen in dreidimensionale Geometrien zu überführen, wie sie zum Beispiel für Innenverkleidungsteile wie Dachhimmel oder Türverkleidungen im Automobil eingesetzt werden. Durch den Umformprozess wird nämlich das Druckbild stark (in der Regel zwischen 1 und 100%) gedehnt, wodurch dieses, aufgrund der geringen Tintenmenge im Vergleich zum Siebdruck, zerstört wird. Aus diesem Grund erscheint dann das textile Substrat, auf dem der Druck aufgebracht wurde, auf der Oberfläche der Dekorschicht und die Designs und Muster sind darüber hinaus nicht mehr erkennbar oder verlieren ihren dekorativen und ansprechenden Charakter.

Aus der US 2019/117040 A1 ist eine modulare Bodenmatte bekannt, umfassend:
(a) eine Vielzahl von thermoplastischen Schalen, wobei die Vielzahl von thermoplastischen Schalen jeweils eine Bodenfläche, vier Randflächen und einen vertieften Bereich enthalten; wobei die Vielzahl von thermoplastischen Schalen durch mindestens ein Befestigungsmittel miteinander verbunden sind;
(b) mindestens ein Textilsubstrat, wobei das mindestens eine Textilsubstrat die gleichen ungefähren Abmessungen wie der ausgesparte Bereich der mehreren thermoplastischen Schalen aufweist und wobei das mindestens eine Textilsubstrat dauerhaft an den mehreren thermoplastischen Schalen befestigt ist; und
(c) ein visuelles Bild, wobei das visuelle Bild auf mindestens einem Teil des mindestens einen textilen Substrats vorhanden ist. Zweck des textilen Substrats als Komponente der Bodenmatte ist es Schmutz aufzunehmen.

US 2018/264789 A1 beschreibt ein dekoratives Vlieslaminat und ein Verfahren zu dessen Herstellung, umfassend eine erste Seite eines ersten Vlieses, das an a) einer ersten Seite einer Polymerfolie oder b) einem zweiten Vlies befestigt ist, wobei das erste Vlies ein Flächengewicht von 15 g/m² bis 500 g/m² und das zweite Vlies ein Flächengewicht von 15 g/m² bis 1200 g/m² aufweist; und ein Färbemittel, das auf einer zweiten Seite des ersten Vlieses aufgebracht ist. Zur Verbesserung der Haltbarkeit der bedruckten Oberflächenschicht kann eine zusätzliche Beschichtung aufgebracht werden oder nicht.

Die Aufgabe der Erfindung besteht darin ein thermoformbares Dekormaterial für den Automobilinnenraum bereitzustellen, das die vorgenannten Nachteile zumindest teilweise ausräumt. Insbesondere soll das Dekormaterial digital bedruckt sein können und dennoch zu einer dreidimensionalen Geometrie, beispielsweise zu einem Innenverkleidungsteil im Automobil, wie einem Dachhimmel oder einer Türinnenverkleidung, thermogeformt werden können, ohne dass der optisch ansprechende Charakter des Drucks verloren geht. Das heißt, dass der stellenweise oder über das gesamte Innenverkleidungsteil auftretende Verzug des Dekormaterials beim Umformen zwar zu einer Dehnung des Designs oder Musters führt, dass aber die Druckschicht im Wesentlichen nicht aufreißt und dadurch das Design gut erkennbar bleibt.

Diese Aufgabe wird gelöst durch ein thermoformbares Dekormaterial für den Automobilinnenraum umfassend eine Dekorschicht, die ein textiles Substrat und auf mindestens einer Seite des textilen Substrats ein digital gedrucktes Design enthält, wobei das digital gedruckte Design eine Dispersionstinte und/oder eine Pigmenttinte aufweist und wobei die Dekorschicht weiterhin eine Deckbinderbeschichtung aufweist, die auf das digital gedruckte Design aufgebracht ist, wobei die Deckbinderbeschichtung ein Bindemittel aufweist, das Polyurethan und/oder Polyacrylat enthält.

Überraschend wurde erfindungsgemäß gefunden, dass es die Verwendung von Polyurethan und/oder Polyacrylat als Bindemittel in einer auf das digital gedruckte Design aufgebrachten Deckbinderbeschichtung ermöglicht, ein Dekormaterial zu erhalten, dass unter Einwirkung von Temperatur und Druck verformt werden kann, ohne dass das digital gedruckte Design negativ beeinträchtigt wird.

Ohne sich auf einen Mechanismus festzulegen wird vermutet, dass dies dadurch möglich wird, dass Polyurethan und/oder Polyacrylat das digital gedruckte Design besonders gut umschließen und stabilisieren können. Darüber hinaus können sie aufgrund ihrer niedrigen Glasübergangstemperatur ihre stabilisierende Wirkung auch beim Thermoformen aufrechterhalten.

Unter dem Begriff "auf das digital gedruckte Design aufgebracht" ist erfindungsgemäß zu verstehen, dass das textile Substrat zunächst mit dem digital gedruckten Design versehen wird und auf dieses anschließend die Deckbinderbeschichtung aufgebracht wird.

Vorteilhaft an der Verwendung eines digital gedruckten Designs, verglichen beispielsweise mit siebgedrucken Designs ist, dass insbesondere mehrfarbige Designs einfach hergestellt werden können. Außerdem können auch feine Muster und Strukturen gut widergegeben werden. Weiterhin vorteilhaft ist die im Prinzip unbegrenzte Rapportlänge des Designs. Weitere verfahrensseitige Vorteile sind geringere Stand- und Inbetriebnahmezeit bei Designwechsel und geringere Wartungszeiten. Ein weiterer Vorteil von digital gedruckten Designs sind die geringen Fixkosten bei dessen Herstellung. Darüber hinaus ist es vorteilhaft, dass es beim digital gedruckten Design im Gegensatz zum Siebdruck nicht zu einem direkten Kontakt zwischen zu bedruckendem Substrat und dem Druckwerkzeug kommt. Somit kann einerseits eine Verschmutzung des Druckwerkzeugs mit Fasern oder Partikeln aus dem Substrat vermieden werden, andererseits kann eine Kontamination des Dekormaterials mit Schwermetallen, wie z.B. Nickel aus dem Sieb verhindert werden. Ein weiterer Vorteil des Digitaldruckverfahrens ist die Verwendung von geringeren Tintenmengen im Vergleich zu den im Siebdruck verwendeten Druckpastenmengen.

In einer bevorzugten Ausführungsform ist das digital gedruckte Design ein direkt auf das textile Substrat gedrucktes Design, das heißt kein mittels Transferdruckverfahren aufgebrachtes Design. Hieran ist vorteilhaft, dass sublimationsresistente Tinten eingesetzt werden können, welche die im Automobilinnenraum geforderten Lichtechtheiten aufweisen und den Langzeit-Temperatur- bzw. Temperatur- und Feuchtebedingungen standhalten, sodass es nicht zu einer Verfärbung oder Ausbleichung der Farben und/oder zu einer Verringerung der Konturschärfe des digital gedruckten Designs durch Ausbluten in benachbarte Bereiche innerhalb der Dekorschicht kommt.

Unter dem Begriff "thermoformbar" ist erfindungsgemäß zu verstehen, dass das Dekormaterial durch Einwirkung von Hitze und Druck in eine gewünschte Form gebracht werden kann.

Unter einem "textilen Substrat" ist erfindungsgemäß ein Flächengebilde zu verstehen, das Fasern enthält. Unter Fasern sind erfindungsgemäß Stapelfasern, bevorzugt mit einer Länge von 2 bis 120 mm, oder Filamente, das heißt Fasern mit theoretisch unbegrenzter Länge, zu verstehen. Textile Substrate können Gewebe, Gewirke, Gestricke und/oder Vliesstoffe sein. Bevorzugte textile Substrate sind Vliesstoffe.

Unter dem Begriff "digital gedruckt" ist erfindungsgemäß zu verstehen, dass ein Design mit Hilfe einer digitalen Druckvorlage auf ein Substrat gedruckt wird. Bevorzugte digitale Druckverfahren sind der Inkjet-Druck und/oder der Valvejet-Druck.

Als digital gedrucktes Design können die verschiedensten Designs verwendet werden, z. B. graphische Muster wie Rauten, Striche, Punkte, aber auch Bilder. Die Designs können ein oder mehrfarbig sein. Das Flächengewicht des digital gedruckten Designs beträgt bevorzugt weniger als 10 g/m², beispielsweise 0,01 bis 10 g/m², noch bevorzugter weniger als 5 g/m², beispielsweise 0,05 bis 5 g/m² und insbesondere weniger als 1 g/m², beispielsweise 0,1 bis 1 g/m².

Das digital gedruckte Design kann auf einer oder beiden Seiten des textilen Substrats aufgebracht sein.

Erfindungsgemäß weist die Dekorschicht eine Deckbinderbeschichtung auf, die Polyacrylat und/oder Polyurethan enthält. Vorteilhaft an den vorgenannten Polymeren ist, dass diese besonders weich und flexibel sind.

Unter Polyacrylaten werden erfindungsgemäß aus Estern der Acrylsäure hergestellte Polymere verstanden. Bevorzugte Ester der Acrylsäure sind Methylacrylat, Ethylacrylat und/oder Butylacrylat. Die Polyacrylate können als Reinacrylate vorliegen, das heißt lediglich aus Estern der Acrylsäure hergestellt worden sein oder als Acrylatcopolymere, das heißt Copolymeren der Ester der Acrylsäure mit anderen Monomeren, beispielsweise mit Butadien, Acrylnitril und/oder Styrol.

Unter Polyurethanen werden erfindungsgemäß Polymere aus Polyolen und Polyisocyanaten verstanden. Dabei sind die Polyole bevorzugt ausgewählt aus der Gruppe aus Polyesterpolyolen, Polyetherpolyolen und/oder Polycarbonatpolyolen.

Vorzugsweise beträgt der Anteil des Polyacrylats und/oder Polyurethans an der Deckbinderbeschichtung mindestens 50 Gew.-%, noch bevorzugter mindestens 80 Gew.-% und insbesondere mindestens 90 Gew.-%.

Bevorzugt ist das Bindemittel ein Polyacrylat und/oder Polyurethan, das in bereits polymerisierter oder teilpolymerisierter Form aufgebracht wurde.

Weiter bevorzugt ist das Bindemittel ein Polyacrylat und/oder Polyurethan, das im kalten Zustand, das heißt unterhalb von 50 °C aufgebracht wurde.

In einer bevorzugten Ausführungsform der Erfindung weist das Polyacrylat eine Glasübergangstemperatur gemessen nach DIN EN ISO 11357-2 (2014, Heizrate: 20 K/min) von weniger als 0 °C, beispielsweise von -30 bis 0 °C, noch bevorzugter von weniger als -5 °C, beispielsweise von -20 bis -5 °C und insbesondere weniger als -10 °C, beispielsweise -15 bis -10 °C auf.

In einer bevorzugten Ausführungsform der Erfindung weist das Polyurethan eine Glasübergangstemperatur gemessen nach DIN EN ISO 11357-2 (2014, Heizrate: 20 K/min) von weniger als 0 °C, beispielsweise von -30 bis 0 °C, noch bevorzugter von weniger als -5 °C, beispielsweise von -20 bis -5 °C und insbesondere weniger als -10 °C, beispielsweise -15 bis -10 °C auf.

Die Deckbinderbeschichtung kann ferner Additive enthalten, beispielsweise Primer, Farbstoffe, Farbpigmente, Schaumhilfsmittel, Verdicker, Dispergatoren.

In einer bevorzugten Ausführungsform der Erfindung weist die Deckbinderbeschichtung ein Flächengewicht von 0,5 bis 200 g/m² auf, noch bevorzugter von 1 bis 150 g/m², noch bevorzugter von 5 bis 100 g/m², insbesondere von 8 bis 50 g/m².

Das textile Substrat kann ein Flächengewicht von 25 bis 1200 g/m², noch bevorzugter von 50 bis 800 g/m², noch bevorzugter von 100 bis 500 g/m², insbesondere von 150 bis 300 g/m² aufweisen. Bei diesen Flächengewichten kann in der umgeformten Struktur eine besonders gleichmäßige Oberfläche erreicht werden, ohne dass es durch starken Verzug zu einem Aufreißen des textilen Substrats und zum Durchscheinen von darunter liegenden Schichten kommt.

Das textile Substrat ist vorzugsweise ein Vliesstoff, insbesondere ein Vliesstoff gemäß DIN EN ISO 9092 (2019). Bevorzugt ist der Vliesstoff als Krempelflor und/oder Airlaid ausgebildet, der/das mittels Wasserstrahlverfestigung und/oder Vernadelung verfestigt ist.

Ebenfalls besonders geeignete textile Substrate sind Spinnvliese, Nassvliese und/oder Meltblown und/oder Kombinationen mit den vorgenannten textilen Substraten.

Bevorzugt sind gekrempelte Nadelvliese aufgrund der guten Homogenität und mechanischen Eigenschaften. Bevorzugt weist das textile Substrat Fasern auf, die Polyester, insbesondere Polyethylenterephthalat, Polyolefine, insbesondere Polyethylen und/oder Polypropylen, Polyamid und/oder Polyacryl, insbesondere Polyacrylnitril als Hauptbestandteil (mehr als 50 Gew.-%, vorzugsweise mehr als 90 Gew.-% bezogen auf das Gesamtgewicht der Fasern) enthalten. Besonders bevorzugt sind Polyester, da sie eine hohe Hitzebeständigkeit, niedrige Entflammbarkeit, gute Verformbarkeit aufweisen.

Ebenfalls bevorzugt weist das textile Substrat Stapelfasern auf, insbesondere mit einer Stapellänge von 2 bis 120 mm, noch bevorzugter 5 bis 100 mm, noch bevorzugter 10 bis 80 mm und insbesondere 20 bis 60 mm.

Ebenfalls bevorzugt weist das textile Substrat Fasern mit einer Feinheit von 0,5 bis 10 dtex auf, noch bevorzugter 1 bis 7 dtex, insbesondere 1,5 bis 5 dtex.

Das textile Substrat kann aus weißen oder farbigen, vorzugsweise spinngefärbten Fasern bestehen.

In einer weiteren bevorzugten Ausführungsform der Erfindung weist das textile Substrat eine Basisbinderbeschichtung auf, die vor Aufbringen des digital gedruckten Designs auf das textile Substrat aufgebracht wurde.

Ist das digital gedruckte Design lediglich auf einer Seite des textilen Substrats aufgebracht, so ist die Basisbinderbeschichtung dabei vorzugsweise auf derjenigen Seite des textilen Substrats aufgebracht, auf der anschließend das digital gedruckte Design aufgebracht wurde.

Die Basisbinderbeschichtung weist vorzugsweise ein Polyacrylat und/oder Polyurethan als Bindemittel auf. Dabei kann das Polyacrylat und/oder Polyurethan gleich oder verschieden zu dem in der Deckbinderbeschichtung eingesetzten Polyurethan und/oder Polyacrylat sein.

In einer bevorzugten Ausführungsform der Erfindung weist das Polyacrylat in der Basisbinderbeschichtung eine Glasübergangstemperatur gemessen nach DIN EN ISO 11357-2 (2014, Heizrate: 20 K/min) von weniger als 0 °C auf, beispielsweise von -30 bis 0 °C, noch bevorzugter von weniger als -5 °C, beispielsweise von -20 bis -5 °C und insbesondere weniger als -10 °C, beispielsweise -15 bis -10 °C auf.

In einer bevorzugten Ausführungsform der Erfindung weist das Polyurethan in der Basisbinderbeschichtung eine Glasübergangstemperatur gemessen nach DIN EN ISO 11357-2 (2014, Heizrate: 20 K/min) von weniger als 0 °C auf, beispielsweise von -30 bis 0 °C, noch bevorzugter von weniger als -5 °C, beispielsweise von -20 bis -5 °C und insbesondere weniger als -10 °C, beispielsweise -15 bis -10 °C auf.

Die Basisbinderbeschichtung kann ferner Additive enthalten, beispielsweise Primer, Schaumhilfsmittel, Verdicker, Dispergatoren.

Das Dekormaterial kann des Weiteren ein Trägermaterial enthalten. Das Trägermaterial ist vorzugsweise an der dem digital gedruckten Design abgewandten Seite des textilen Substrats angeordnet. Das textile Substrat und das Trägermaterial sind vorzugsweise über eine Adhäsivschicht miteinander verbunden. Die Adhäsivschicht enthält vorzugsweise Polyethylen, Polypropylen und/oder Copolyamid. Die Adhäsivschicht kann beispielsweise als Puder, Hotmelt, Folie oder Klebeweb ausgebildet sein. Das Flächengewicht der Adhäsivschicht beträgt vorzugsweise 1 bis 200 g/m², bevorzugt 5 bis 150 g/m², noch bevorzugter 10 bis 50 g/m².

In einer bevorzugten Ausführungsform weist die Dekorschicht eine Oberflächenbeschichtung zum Schutz vor Anschmutzung auf.

Weist das Dekormaterial ein Trägermaterial auf, so ist die Oberflächenbeschichtung zweckmäßigerweise auf der dem Trägermaterial abgewandten Seite der Dekorschicht angeordnet.

Erfindungsgemäß bevorzugte Pigmenttinten weisen ein Pigment ausgewählt aus der Gruppe bestehend aus anorganischen Pigmenten und/oder organischen Pigmenten, wie Azopigmenten, Anthrachinonpigmenten, Benzimidazolonpigmenten, Indigoiden, Dioxazinpigmenten, Chinacridonpigmenten, Chinophthalonpigmenten, Phthalocyaninpigmenten, Isoindolinpigmenten, Isoindolinonpigmenten, Perylenpigmenten, Perinonpigmenten, und/oder Metallkomplexpigmenten und/oder Gemischen hiervon auf.

Erfindungsgemäß bevorzugte Dispersionstinten weisen einen Farbstoff ausgewählt aus der Gruppe bestehend aus Azofarbstoffen, anthrachinoiden Farbstoffen, wie Hydroxy-, Nitro- und/oder Aminoanthrachinonen, Chinophthalonfarbstoffen, Azomethinfarbstoffen, Stilbenfarbstoffen, Methinfarbstoffen und/oder Nitrodiarylaminfarbstoffen und/oder Gemischen hiervon auf.

Die Pigment- oder Dispersionstinten können weitere Bestandteile aufweisen, beispielsweise Verdicker, Bindemittel, Tenside.

Ein weiterer Gegenstand der vorliegenden Erfindung umfasst ein Formteil, insbesondere ein Innenverkleidungsteil im Automobil, beispielsweise einen Autodachhimmel, eine Türinnenverkleidung, einen Boden, eine Zubehörmatte, eine Laderaummatte, eine Kofferraumverkleidung, eine Handschuhfachverkleidung, eine Ladeboden-, Konsolen- und Kartentaschenverkleidung, eine Sitzlehnenverkleidung und/oder eine Radkastenverkleidung hergestellt aus einem erfindungsgemäßen Dekormaterial mittels Thermoformen.

Das erfindungsgemäße thermoformbare Dekormaterial kann durch ein Verfahren hergestellt werden, umfassend folgende Schritte:
a) Bereitstellen eines textilen Substrats;
b) Aufbringen eines digital gedruckten Designs, wobei das digital gedruckte Design eine Dispersionstinte und/oder eine Pigmenttinte aufweist, auf mindestens eine Seite des textilen Substrats;
c) Aufbringen einer Deckbinderbeschichtung auf das digital gedruckte Design, wobei die Deckbinderbeschichtung ein Bindemittel aufweist, das Polyurethan und/oder Polyacrylat enthält, unter Ausbildung einer Dekorschicht.

Für die bevorzugten Ausführungsformen des Verfahrens zur Herstellung eines Dekormaterials, insbesondere im Hinblick auf das textile Substrat, das digital gedruckten Design und die Deckbinderbeschichtung gilt das in Bezug auf das Dekormaterial und dessen bevorzugte Ausführungsform Gesagte entsprechend.

Das Aufbringen des digital gedruckten Designs erfolgt bevorzugt mittels Inkjet- oder Valvejet-Druck.

Auf das digital gedruckte Design wird eine Bindemittel enthaltende Deckbinderbeschichtung aufgebracht. Dies kann beispielsweise mittels Sprühauftrag oder Schaumbeschichtung erfolgen.

Vorzugsweise wird das Bindemittel dabei in bereits polymerisierter oder teilpolymerisierter Form aufgebracht.

Weiter bevorzugt wird das Bindemittel dabei im kalten Zustand, das heißt unterhalb von 50 °C aufgebracht.

Vor dem Aufbringen des digital gedruckten Designs kann eine Basisbinderbeschichtung auf das textile Substrat aufgebracht werden. Dies kann ebenfalls beispielsweise mittels Sprühauftrag oder Schaumbeschichtung erfolgen.

Auf die Dekorschicht kann eine Oberflächenbeschichtung aufgebracht werden. Dies kann ebenfalls beispielsweise mittels Sprühauftrag oder Schaumbeschichtung erfolgen.

Die in den vorangehenden Schritten erhaltene Dekorschicht kann mit einem Trägermaterial verbunden werden, beispielsweise mit einer Adhäsivschicht. Das mit dem erfindungsgemäßen Verfahren erhaltene Dekormaterial kann mittels Thermoformen zu einem Formteil umgeformt werden.

In einer Ausführungsform der Erfindung wird das Formteil aus einem Dekormaterial, das kein Trägermaterial enthält, hergestellt. In einer bevorzugten Ausführungsform wird das Formteil aus einem Trägermaterial enthaltenden Dekormaterial hergestellt. Dabei können das Thermoformen und das Verbinden der Dekorschicht mit dem Trägermaterial in einem Schritt erfolgen. Alternativ kann das Verbinden der Dekorschicht mit dem Trägermaterial vor dem Thermoformen durchgeführt werden.

Ein weiterer Gegenstand der Erfindung umfasst die Verwendung des erfindungsgemäßen Dekormaterials zur Herstellung eines Formteils, insbesondere eines Innenverkleidungsteils im Automobil, beispielsweise eines Autodachhimmels, einer Türinnenverkleidung, eines Bodens, einer Zubehörmatte, einer Laderaummatte, einer Kofferraumverkleidung, einer Handschuhfachverkleidung, einer Ladeboden-, Konsolen- und Kartentaschenverkleidung, einer Sitzlehnenverkleidung und/oder einer Radkastenverkleidung.

Bei den in diesem Text in Bezug genommenen Normen handelt es sich, sofern nicht anders angegeben, um die jeweils am Anmeldetag gültige Fassung der Norm.

### Kurzbeschreibung der Zeichnung

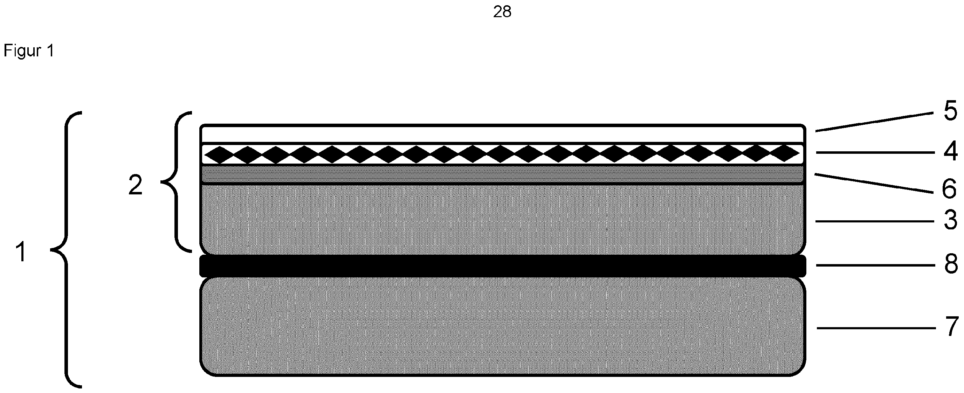

Figur 1 zeigt ein erfindungsgemäßes Dekormaterial 1.

In Figur 1 ist ein erfindungsgemäßes Dekormaterial 1 gezeigt, umfassend eine Dekorschicht 2, die ein textiles Substrat 3 und auf mindestens einer Seite des textilen Substrats 3 ein digital gedrucktes Design 4 enthält, wobei das digital gedruckte Design 4 eine Dispersionstinte und/oder eine Pigmenttinte aufweist und wobei die Dekorschicht 2 weiterhin eine Deckbinderbeschichtung 5 aufweist, die auf das digital gedruckte Design 4 aufgebracht ist, wobei die Deckbinderbeschichtung 5 ein Bindemittel aufweist, das Polyurethan und/oder Polyacrylat enthält. Das textile Substrat 3 weist ferner eine Basisbinderbeschichtung 6 auf, die vor Aufbringen des digital gedruckten Designs 4 auf das textile Substrat 3 aufgebracht wurde. Das Dekormaterial 1 enthält des Weiteren ein Trägermaterial 7. Das Trägermaterial 7 ist an der dem digital gedruckten Design 4 abgewandten Seite des textilen Substrats 3 angeordnet. Das textile Substrat 3 und das Trägermaterial 7 sind über eine Adhäsivschicht 8 miteinander verbunden.

### Beispiele

### Beispiel 1: Herstellung eines erfindungsgemäßen Dekormaterials mit Pigmenttinte

Ein Nadelvlies mit einem Flächengewicht von 200 g/m², bestehend aus Polyesterfasern mit einer Feinheit von 2 bis 4 dtex wird vollflächig mit einer 10 Gew.-%-igen wässrigen Polyacrylat-Dispersion (Synthomer PLEXTOL BV 380, Glasübergangstemperatur: -11 °C) besprüht und in einem Konvektionsofen bei 100 bis 160 °C getrocknet. Hierdurch wird die Basisbinderbeschichtung erhalten. Die beschichtete Seite wird mittels Inkjet-Druck mit einer PigmentTinte (Dupont ARTISTRIO P5100+ Cyan, P5200+ Magenta, P5300+ Schwarz) mit einem Rautenmuster digital bedruckt. Das dabei entstehende digital gedruckte Design hat ein Flächengewicht von 5 g/m². Anschließend wird die bedruckte Seite des Vliesstoffs vollflächig mit einer 10 Gew.-%-igen wässrigen Polyacrylat-Dispersion (Synthomer PLEXTOL BV 380, Glasübergangstemperatur: -11 °C) besprüht. Der besprühte Vliesstoff wird in einem Konvektionsofen bei 100 bis 160 °C getrocknet und die verbleibende Schicht aus Polyacrylat verfestigt. Die dabei ausgebildete Deckbinderbeschichtung weist ein Flächengewicht von 10 g/m² auf und deckt das digital gedruckte Design vollflächig ab. Aufgrund ihrer Transparenz bleibt das darunter liegende digital gedruckte Design sichtbar.

Die gebildete Dekorschicht wird anschließend auf ein Trägermaterial aufgebracht. Hierzu wird auf ein Polypropylen-Glasfaser-Hybridvlies als Trägermaterial mit einem Flächengewicht von 800 g/m² eine Lage eines Schmelzklebers in Form eines Klebewebs mit 10 g/m² angeordnet und darauf wird die Dekorschicht mit der bedruckten Seite nach oben abgelegt. Dieser Lagenaufbau wird in einer Heizpresse bei 160 °C mit einem Werkzeug zu einem Autodachhimmel verformt, wobei das Material stellenweise um bis zu 100% gedehnt wurde.

Nach der Entnahme aus dem Werkzeug zeigt sich, dass die Dekorschicht weitestgehend erhalten geblieben ist, sie durch die Dehnung nicht aufgerissen ist und das Motiv immer noch deutlich erkennbar ist. Ebenso ist der textile Griff erhalten geblieben.

### Beispiel 2: Herstellung eines Vergleichsdekormaterials mit Pigmenttinte ohne Deckbinderbeschichtung

Ein Nadelvlies mit einem Flächengewicht von 200 g/m², bestehend aus Polyesterfasern mit einer Feinheit von 2 bis 4 dtex wird vollflächig mit einer 10 Gew.-%-igen wässrigen Polyacrylat-Dispersion (Synthomer PLEXTOL BV 380, Glasübergangstemperatur: -11 °C) besprüht und in einem Konvektionsofen bei 100 bis 160 °C getrocknet. Hierdurch wird die Basisbinderbeschichtung erhalten. Die beschichtete Seite wird mittels Inkjet-Druck mit einer PigmentTinte (Dupont ARTISTRIO P5100+ Cyan, P5200+ Magenta, P5300+ Schwarz) mit einem Rautenmuster digital bedruckt. Das dabei entstehende digital gedruckte Design hat ein Flächengewicht von 5 g/m².

Der bedruckte Vliesstoff wird anschließend auf ein Trägermaterial aufgebracht. Hierzu wird auf ein Polypropylen-Glasfaser-Hybridvlies als Trägermaterial mit einem Flächengewicht von 800 g/m² eine Lage eines Schmelzklebers in Form eines Klebewebs mit 10 g/m² angeordnet und darauf wird der bedruckte Vliesstoff mit der bedruckten Seite nach oben abgelegt. Dieser Lagenaufbau wird in einer Heizpresse bei 160 °C mit einem Werkzeug zu einem Autodachhimmel verformt, wobei das Material stellenweise um bis zu 100% gedehnt wurde.

Nach der Entnahme aus dem Werkzeug zeigt sich, dass das digital gedruckte Design an den gedehnten Stellen zerstört wurde und das Motiv daher nicht mehr erkennbar ist. Der optisch ansprechende Charakter der Dekorschicht ist nach dem Thermoformen nicht mehr vorhanden.

### Beispiel 3: Herstellung eines erfindungsgemäßen Dekormaterials mit Dispersionstinte

Ein Nadelvlies mit einem Flächengewicht von 200 g/m², bestehend aus Polyesterfasern mit einer Feinheit von 2 bis 4 dtex wird vollflächig mit einer 10 Gew.-%-igen wässrigen Polyacrylat-Dispersion (Synthomer PLEXTOL BV 380, Glasübergangstemperatur: -11 °C) besprüht und in einem Konvektionsofen bei 100 bis 160 °C getrocknet. Hierdurch wird die Basisbinderbeschichtung erhalten. Die beschichtete Seite wird mittels Inkjet-Druck mit einer DispersionsTinte (Huntsman TERATOP^{®} XKS HL) mit einem Rautenmuster digital bedruckt. Das dabei entstehende digital gedruckte Design hat ein Flächengewicht von 5 g/m². Zum Fixieren des Drucks auf dem Vliesstoff wird der bedruckte Vliesstoff in einem Konvektionsofen für 1-2 Minuten bei 180 °C behandelt, dabei dringt mindestens ein Teil der Tinte in den Polyesterfaserstruktur ein. Anschließend wird die bedruckte Seite des Vliesstoffs vollflächig mit einer 10 Gew.-%-igen wässrigen Polyacrylat-Dispersion (Synthomer PLEXTOL BV 380, Glasübergangstemperatur: -11 °C) besprüht. Der besprühte Vliesstoff wird in einem Konvektionsofen bei 100 bis 160 °C getrocknet und die verbleibende Schicht aus Polyacrylat verfestigt. Die dabei ausgebildete Deckbinderbeschichtung weist ein Flächengewicht von 10 g/m² auf und deckt das darunter liegende digital gedruckte Design vollflächig ab. Aufgrund ihrer Transparenz bleibt das darunter liegende digital gedruckte Design sichtbar.

Die gebildete Dekorschicht wird anschließend auf ein Trägermaterial aufgebracht. Hierzu wird auf ein Polypropylen-Glasfaser-Hybridvlies als Trägermaterial mit einem Flächengewicht von 800 g/m² eine Lage eines Schmelzklebers in Form eines Klebewebs mit 10 g/m² angeordnet und darauf wird die Dekorschicht mit der bedruckten Seite nach oben abgelegt. Dieser Lagenaufbau wird in einer Heizpresse bei 160 °C mit einem Werkzeug zu einem Autodachhimmel verformt, wobei das Material stellenweise um bis zu 100% gedehnt wurde.

Nach der Entnahme aus dem Werkzeug zeigt sich, dass die Dekorschicht weitestgehend erhalten geblieben ist, sie durch die Dehnung nicht aufgerissen ist und das Motiv immer noch deutlich erkennbar ist. Ebenso ist der textile Griff erhalten geblieben. Die Deckbinderbeschichtung sorgt anscheinend außerdem dafür, dass die thermisch übertragbare Dispersionstinte auf dem Vliesstoff bleibt und nicht auf das Werkzeug abfärbt.

Mit dem erhaltenen Dekormaterial werden Reibechtheitstests durchgeführt. Es zeigt sich, dass sogar ohne einen Waschschritt, der nach dem Stand der Technik beim direkten Bedrucken mit Dispersionstinten durchgeführt werden muss, das Dekormaterial eine hervorragende Reibechtheit aufweist. Der textile Griff bleibt erhalten.

### Beispiel 4: Herstellung eines Vergleichsdekormaterials mit Dispersionstinte ohne Deckbinderbeschichtung

Ein Nadelvlies mit einem Flächengewicht von 200 g/m², bestehend aus Polyesterfasern mit einer Feinheit von 2 bis 4 dtex wird vollflächig mit einer 10 Gew.-%-igen wässrigen Polyacrylat-Dispersion (Synthomer PLEXTOL BV 380, Glasübergangstemperatur: -11 °C) besprüht und in einem Konvektionsofen bei 100 bis 160 °C getrocknet. Hierdurch wird die Basisbinderbeschichtung erhalten. Die beschichtete Seite wird mittels Inkjet-Druck mit einer DispersionsTinte (Huntsman TERATOP^{®} XKS HL) mit einem Rautenmuster digital bedruckt. Das dabei entstehende digital gedruckte Design hat ein Flächengewicht von 5 g/m². Zum Fixieren des Drucks auf dem Vliesstoff wird der bedruckte Vliesstoff in einem Konvektionsofen für 1-2 Minuten bei 180 °C behandelt, dabei dringt mindestens ein Teil der Tinte in den Polyesterfaserstruktur ein.

Der bedruckte Vliesstoff wird anschließend auf ein Trägermaterial aufgebracht. Hierzu wird auf ein Polypropylen-Glasfaser-Hybridvlies als Trägermaterial mit einem Flächengewicht von 800 g/m² eine Lage eines Schmelzklebers in Form eines Klebewebs mit 10 g/m² angeordnet und darauf wird die Dekorschicht mit der bedruckten Seite nach oben abgelegt. Dieser Lagenaufbau wird in einer Heizpresse bei 160 °C mit einem Werkzeug zu einem Autodachhimmel verformt, wobei das Material stellenweise um bis zu 100% gedehnt wurde.

Nach der Entnahme aus dem Werkzeug zeigt sich, dass das digital gedruckte Design an den gedehnten Stellen zerstört wurde und das Motiv daher nicht mehr erkennbar ist. Der optisch ansprechende Charakter der Dekorschicht ist nach dem Thermoformen nicht mehr vorhanden. Außerdem hat sich auf der Werkzeugoberfläche, die mit dem digital gedruckten Design in Kontakt war, ein Teil der Dispersionstinte abgefärbt. Dies zeigt sich gegebenenfalls erst beim Reinigen der Werkzeugoberfläche mit einem Isopropanol-getränkten Zellstofftuch.

Es wurden Reibechtheitstests durchgeführt. Dabei wurde gefunden, dass die Reibechtheit deutlich schlechter ist als bei dem erfindungsgemäßen Dekormaterial.

## Patentansprüche

1. Thermoformbares Dekormaterial (1) für den Automobilinnenraum umfassend eine Dekorschicht (2), die ein textiles Substrat (3) und auf mindestens einer Seite des textilen Substrats (3) ein digital gedrucktes Design (4) enthält, wobei das digital gedruckte Design (4) eine Dispersionstinte und/oder eine Pigmenttinte aufweist und wobei die Dekorschicht (2) weiterhin eine Deckbinderbeschichtung (5) aufweist, die auf das digital gedruckte Design (4) aufgebracht ist, **dadurch gekennzeichnet, dass** die Deckbinderbeschichtung (5) ein Bindemittel aufweist, das Polyurethan und/oder Polyacrylat enthält.

2. Thermoformbares Dekormaterial (1) nach Anspruch 1, **dadurch gekennzeichnet, dass** das digital gedruckte Design (4) ein direkt auf das textile Substrat (3) gedrucktes Design (4) ist.

3. Thermoformbares Dekormaterial (1) nach Anspruch 1 oder 2, **dadurch gekennzeichnet, dass** das Bindemittel ein amorphes Polyacrylat und/oder Polyurethan enthält.

4. Thermoformbares Dekormaterial (1) nach einem oder mehreren der vorangehenden Ansprüche, **dadurch gekennzeichnet, dass** das Polyacrylat und/oder Polyurethan eine Glasübergangstemperatur gemessen nach DIN EN ISO 11357-2 (2014, Heizrate: 20 K/min) von weniger als 0 °C, beispielsweise von -30 bis 0 °C, aufweist.

5. Thermoformbares Dekormaterial (1) nach einem oder mehreren der vorangehenden Ansprüche, **dadurch gekennzeichnet, dass** die Deckbinderbeschichtung (5) ein Flächengewicht gemessen nach DIN EN 12127:1997-12 von 0,5 bis 200 g/m² aufweist.

6. Thermoformbares Dekormaterial (1) nach einem oder mehreren der vorangehenden Ansprüche, **dadurch gekennzeichnet, dass** das textile Substrat (3) ein Vliesstoff ist, der vorzugsweise als Krempelflor und/oder Airlaid ausgebildet ist, der/das mittels Wasserstrahlverfestigung und/oder Vernadelung verfestigt ist.

7. Thermoformbares Dekormaterial (1) nach einem oder mehreren der vorangehenden Ansprüche, **dadurch gekennzeichnet, dass** das textile Substrat (3) Fasern aufweist, die Polyester, insbesondere Polyethylenterephthalat, Polyolefine, insbesondere Polyethylen und/oder Polypropylen, Polyamid und/oder Polyacryl, insbesondere Polyacrylnitril als Hauptbestandteil der Fasern enthalten.

8. Thermoformbares Dekormaterial (1) nach einem oder mehreren der vorangehenden Ansprüche, **dadurch gekennzeichnet, dass** das textile Substrat (3) Fasern mit einer Feinheit von 0,5 bis 10 dtex aufweist.

9. Thermoformbares Dekormaterial (1) nach einem oder mehreren der vorangehenden Ansprüche, **dadurch gekennzeichnet, dass** das Dekormaterial (1) ein Trägermaterial (7) enthält, welches an der dem digital gedruckten Design (4) abgewandten Seite des textilen Substrats angeordnet ist.

10. Thermoformbares Dekormaterial (1) nach einem oder mehreren der vorangehenden Ansprüche, **dadurch gekennzeichnet, dass** das textile Substrat (3) eine Basisbinderbeschichtung (6) aufweist, die vor Aufbringen des digital gedruckten Designs (4) auf das textile Substrat (3) aufgebracht wurde.

11. Thermoformbares Dekormaterial (1) nach einem oder mehreren der vorangehenden Ansprüche, **dadurch gekennzeichnet, dass** die Basisbinderbeschichtung (6) ein Polyacrylat und/oder Polyurethan als Bindemittel aufweist, wobei das Polyacrylat und/oder Polyurethan gleich oder verschieden zu dem in der Deckbinderbeschichtung (5) eingesetzten Polyurethan und/oder Polyacrylat ist.

12. Thermoformbares Dekormaterial (1) nach einem oder mehreren der vorangehenden Ansprüche, **dadurch gekennzeichnet, dass** die Pigmenttinte anorganische Pigmente und/oder organische Pigmente ausgewählt aus der Gruppe bestehend aus Azopigmenten, Anthrachinonpigmenten, Benzimidazolonpigmenten, Indigoiden, Dioxazinpigmenten, Chinacridonpigmenten, Chinophthalonpigmenten, Phthalocyaninpigmenten, Isoindolinpigmenten, Isoindolinonpigmenten, Perylenpigmenten, Perinonpigmenten, und/oder Metallkomplexpigmenten und/oder Gemischen hiervon enthält und/oder die Dispersionstinte einen Farbstoff ausgewählt aus der Gruppe bestehend aus Azofarbstoffen, anthrachinoiden Farbstoffen, wie Hydroxy-, Nitro- und/oder Aminoanthrachinonen, Chinophthalonfarbstoffen, Azomethinfarbstoffen, Stilbenfarbstoffen, Methinfarbstoffen und/oder Nitrodiarylaminfarbstoffen und/oder Gemischen hiervon aufweist.

13. Verwendung eines thermoformbaren Dekormaterials (1) nach einem oder mehreren der vorangehenden Ansprüche zur Herstellung eines Formteils, insbesondere eines Innenverkleidungsteils im Automobil, beispielsweise eines Autodachhimmels, einer Türinnenverkleidung, eines Bodens, einer Zubehörmatte, einer Laderaummatte, einer Kofferraumverkleidung, einer Handschuhfachverkleidung, einer Ladeboden-, Konsolen- und Kartentaschenverkleidung, einer Sitzlehnenverkleidung und/oder einer Radkastenverkleidung.

14. Formteil, insbesondere Innenverkleidungsteil im Automobil, hergestellt aus einem Dekormaterial (1) nach einem oder mehreren der vorangehenden Ansprüche mittels Thermoformen.

15. Verfahren zur Herstellung eines thermoformbaren Dekormaterials nach einem oder mehreren der Ansprüche 1-14 umfassend folgende Schritte:
a) Bereitstellen eines textilen Substrats;
b) Aufbringen eines digital gedruckten Designs (4), wobei das digital gedruckte Design (4) eine Dispersionstinte und/oder eine Pigmenttinte aufweist, auf mindestens eine Seite des textilen Substrats;
c) Aufbringen einer Deckbinderbeschichtung (5) auf das digital gedruckte Design (4), wobei die Deckbinderbeschichtung (5) ein Bindemittel aufweist, das Polyurethan und/oder Polyacrylat enthält, unter Ausbildung einer Dekorschicht (2).

## Claims

1. Thermoformable decor material (1) for the automotive interior, comprising a decor layer (2) containing a textile substrate (3) and, on at least one side of the textile substrate (3), a digitally printed design (4), the digitally printed design (4) comprising a dispersion-based ink and/or a pigment-based ink, and the decor layer (2) further comprising a binder topcoat (5) applied to the digitally printed design (4), **characterized in that** the binder topcoat (5) comprises a binder containing polyurethane and/or polyacrylate.

2. Thermoformable decor material (1) according to Claim 1, **characterized in that** the digitally printed design (4) is a design (4) printed directly onto the textile substrate (3).

3. Thermoformable decor material (1) according to Claim 1 or 2, **characterized in that** the binder contains an amorphous polyacrylate and/or polyurethane.

4. Thermoformable decor material (1) according to one or more of the preceding claims, **characterized in that** the polyacrylate and/or polyurethane has a glass transition temperature, measured according to DIN EN ISO 11357-2 (2014, heating rate: 20 K/min), of less than 0°C, for example of -30 to 0°C.

5. Thermoformable decor material (1) according to one or more of the preceding claims, **characterized in that** the binder topcoat (5) has a surface weight, measured according to DIN EN 12127:1997-12, of 0.5 to 200 g/m².

6. Thermoformable decor material (1) according to one or more of the preceding claims, **characterized in that** the textile substrate (3) is a nonwoven fabric configured preferably as a card web and/or airlaid web and consolidated by means of waterjet consolidation and/or needling.

7. Thermoformable decor material (1) according to one or more of the preceding claims, **characterized in that** the textile substrate (3) comprises fibres which contain polyesters, more particularly polyethylene terephthalate, polyolefins, more particularly polyethylene and/or polypropylene, polyamides and/or polyacrylic, more particularly polyacrylonitrile, as principal constituent of the fibres.

8. Thermoformable decor material (1) according to one or more of the preceding claims, **characterized in that** the textile substrate (3) comprises fibres having a linear density of 0.5 to 10 dtex.

9. Thermoformable decor material (1) according to one or more of the preceding claims, **characterized in that** the decor material (1) contains a carrier material (7) disposed on the side of the textile substrate facing away from the digitally printed design (4).

10. Thermoformable decor material (1) according to one or more of the preceding claims, **characterized in that** the textile substrate (3) comprises a binder basecoat (6) applied to the textile substrate (3) before application of the digitally printed design (4).

11. Thermoformable decor material (1) according to one or more of the preceding claims, **characterized in that** the binder basecoat (6) comprises a polyacrylate and/or polyurethane as binder, the polyacrylate and/or polyurethane being the same as or different from the polyurethane and/or polyacrylate used in the binder topcoat (5).

12. Thermoformable decor material (1) according to one or more of the preceding claims, **characterized in that** the pigment-based ink contains inorganic pigments and/or organic pigments selected from the group consisting of azo pigments, anthraquinone pigments, benzimidazolone pigments, indigoids, dioxazine pigments, quinacridone pigments, quinophthalone pigments, phthalocyanine pigments, isoindoline pigments, isoindolinone pigments, perylene pigments, perinone pigments, and/or metal complex pigments and/or mixtures thereof, and/or the dispersion-based ink comprises a dye selected from the group consisting of azo dyes, anthraquinoid dyes, such as hydroxy-, nitro- and/or aminoanthraquinones, quinophthalone dyes, azomethine dyes, stilbene dyes, methine dyes and/or nitrodiarylamine dyes and/or mixtures thereof.

13. Use of a thermoformable decor material (1) according to one or more of the preceding claims for producing a moulding, more particularly an interior trim part in a motor vehicle, for example a car roof liner, an interior door trim, a floor, an accessory mat, a cargo space mat, a luggage space mat, a glovebox liner, a loading floor, console and map pocket liner, a seat back liner and/or a wheel well liner.

14. Moulding, more particularly interior trim part in a motor vehicle, produced from a decor material (1) according to one or more of the preceding claims by means of thermoforming.

15. Method for producing a thermoformable decor material according to one or more of Claims 1-14, comprising steps as follows:
a) providing a textile substrate;
b) applying a digitally printed design (4), the digitally printed design (4) comprising a dispersion-based ink and/or a pigment-based ink, to at least one side of the textile substrate;
c) applying a binder topcoat (5) to the digitally printed design (4), the binder topcoat (5) comprising a binder containing polyurethane and/or polyacrylate, to form a decor layer (2).

## Revendications

1. Matière décorative thermoformable (1) pour l'habitacle d'une automobile, comprenant une couche décorative (2) qui contient un substrat textile (3) et, sur au moins une face du substrat textile (3), un dessin imprimé numérique (4), le dessin imprimé numérique (4) comportant une encre de dispersion et/ou une encre pigmentaire, et la couche décorative (2) comportant en outre un revêtement d'encollage (5), qui est appliqué sur le dessin imprimé numérique (4), **caractérisée en ce que** le revêtement d'encollage (5) comporte un liant qui contient un polyuréthane et/ou un polyacrylate.

2. Matière décorative thermoformable (1) selon la revendication 1, **caractérisée en ce que** le dessin imprimé numérique (4) est un dessin (4) imprimé directement sur le substrat textile (3).

3. Matière décorative thermoformable (1) selon l'une quelconque des revendications 1 ou 2, **caractérisée en ce que** le liant contient un polyuréthane et/ou un polyacrylate amorphe.

4. Matière décorative thermoformable (1) selon l'une ou plusieurs quelconques des revendications précédentes, **caractérisée en ce que** le polyacrylate et/ou le polyuréthane présentent une température de transition vitreuse, mesurée selon DIN EN ISO 11357-2 (2014, vitesse de montée en température : 20 K/min) inférieure à 0 °C, par exemple de -30 à 0 °C.

5. Matière décorative thermoformable (1) selon l'une ou plusieurs quelconques des revendications précédentes, **caractérisée en ce que** le revêtement d'encollage (5) présente une masse surfacique, mesurée selon DIN EN 12127:1997-12 de 0,5 à 200 g/m².

6. Matière décorative thermoformable (1) selon l'une ou plusieurs quelconques des revendications précédentes, **caractérisée en ce que** le substrat textile (3) est un non-tissé, qui de préférence est constitué d'une nappe de carde et/ou d'un airlaid, qui est fixé par fixage au jet d'eau et/ou par aiguilletage.

7. Matière décorative thermoformable (1) selon l'une ou plusieurs quelconques des revendications précédentes, **caractérisée en ce que** le substrat textile (3) comprend des fibres qui contiennent des polyesters, en particulier du poly(téréphtalate d'éthylène), des polyoléfines, en particulier du polyéthylène et/ou du polypropylène, un polyamide et/ou un polyacrylique, en particulier le polyacrylonitrile, en tant que constituant principal des fibres.

8. Matière décorative thermoformable (1) selon l'une ou plusieurs quelconques des revendications précédentes, **caractérisée en ce que** le substrat textile (3) comprend des fibres ayant une finesse de 0,5 à 10 dtex.

9. Matière décorative thermoformable (1) selon l'une ou plusieurs quelconques des revendications précédentes, **caractérisée en ce que** le matériau décoratif (1) contient un matériau support (7) qui est disposé sur la face du substrat textile opposée au dessin imprimé numérique (4).

10. Matière décorative thermoformable (1) selon l'une ou plusieurs quelconques des revendications précédentes, **caractérisée en ce que** le substrat textile (3) comprend un revêtement de liant de base (6), qui avait été appliqué sur le substrat textile (3) avant application du dessin imprimé numérique (4).

11. Matière décorative thermoformable (1) selon l'une ou plusieurs quelconques des revendications précédentes, **caractérisée en ce que** le revêtement de liant de base (6) comprend en tant que liant un polyacrylate et/ou un polyuréthane , le polyacrylate et/ou le polyuréthane étant identiques au polyuréthane et/ou au polyacrylate utilisés dans le revêtement d'encollage (5), ou en étant différents.

12. Matière décorative thermoformable (1) selon l'une ou plusieurs quelconques des revendications précédentes, **caractérisée en ce que** l'encre pigmentaire contient des pigments inorganiques et/ou des pigments organiques choisis dans le groupe consistant en les pigments azoïques, les pigments d'anthraquinone, les pigments de benzimidazolone, les indigoïdes, les pigments de dioxazine, les pigments de quinacridone, les pigments de quinophtalone, les pigments de phtalocyanine, les pigments d'isoindoline, les pigments d'isoindolinone, les pigments de pérylène, les pigments de périnone et/ou les pigments de complexes métalliques et/ou les mélanges de ceux-ci, et/ou l'encre de dispersion comprend un colorant choisi dans le groupe consistant en les colorants azoïques, les colorants anthraquinoïdes tels que les hydroxy-, nitro- et/ou aminoanthraquinones, les colorants de quinophtalone, les colorants d'azométhine, les colorants stilbéniques, les colorants de méthine et/ou les colorants de nitrodiarylamine et/ou les mélanges de ceux-ci.

13. Utilisation d'une matière décorative thermoformable (1) selon l'une ou plusieurs quelconques des revendications précédentes pour fabriquer un objet moulé, en particulier une pièce de garniture intérieure d'une automobile, par exemple un plafond, une garniture intérieure de porte, un plancher, un surtapis, un tapis de coffre, une garniture de coffre, une garniture de boîte à gants, une garniture de plancher de charge, de console et de porte-carte, une garniture de dossier de siège et/ou une garniture de passage de roue.

14. Objet moulé, en particulier élément de garniture intérieur d'une automobile, fabriqué à partir d'une matière décorative (1) selon l'une ou plusieurs quelconques des revendications précédentes par thermoformage.

15. Procédé de fabrication d'une matière décorative thermoformable selon l'une ou plusieurs quelconques des revendications 1 à 14, comprenant les étapes suivantes :
a) fourniture d'un substrat textile ;
b) application, sur au moins une face du substrat textile, d'un dessin imprimé numérique (4), le dessin imprimé numérique (4) comportant une encre de dispersion et/ou une encre pigmentaire ;
c) application d'un revêtement d'encollage (5) sur le dessin imprimé numérique (4), le revêtement d'encollage (5) comportant un liant qui contient un polyuréthane et/ou un polyacrylate, avec formation d'une couche décorative (2).
